# EUROPEAN PATENT SPECIFICATION

(11) **EP 2 083 661 B1**
(45) Date of publication and mention of the grant of the patent: **02.01.2019**
(21) Application number: 07819818.1
(22) Date of filing: 15.11.2007
(51) Int. Cl.: A47J 31/36, A47J 31/44, A47J 31/00

(54) **APPARATUS AND METHOD FOR EXTRACTING A HOT BEVERAGE**
VORRICHTUNG UND VERFAHREN ZUR EXTRAKTION EINES HEISSGETRÄNKES
APPAREIL ET PROCÉDÉ POUR EXTRAIRE UNE BOISSON CHAUDE

(30) Priority: 16.11.2006 EP 06023798
(43) Date of publication of application: 05.08.2009
(73) Proprietor: Amici Caffè AG, 6330 Cham (CH)
(72) Inventor: ILLY, Francesco, 7516 Maloja (CH); PARENTI, Aessandro, 50143 Firenze (IT); SPUGNOLI, Paolo, 50100 Firenze (IT)
(74) Representative: Bergadano, Mirko
(86) International application number: PCT/EP2007/009866
(87) International publication number: WO 2008/058731

(56) References cited:
- EP-A- 1 532 903
- EP-A1- 0 250 810
- WO-A-86/05670
- WO-A-2006/002741
- DE-A1- 2 813 555
- GB-A- 2 386 543

## Description

### Technical field of the invention

The present invention relates to a method and an apparatus for extracting flavours from any desired flavour carrier, such as roasted coffee and/or dried tea, for preparing a hot beverage according to the features of the preamble of Claims 1 and 7.

### Prior art

A large number of apparatuses and methods for extracting flavours from coffee and/or tea are known from the prior art. In the case of extraction of this type, the flavours are extracted from coffee by means of water. The water which is enriched with the flavours is filtered by means of a filter. The result is a coffee beverage or a tea beverage.

By way of example, EP 0 468 080 describes such an apparatus for extracting the flavours from coffee which is contained in a capsule. A mixture of water and air is blown into the capsule via a piercing needle which enters the upper face of the capsule. The rising pressure in the capsule breaks open the lower face of the capsule and the coffee beverage can flow out of the capsule.

Other documents, for example WO 86/05670, describe a further apparatus for extracting a coffee beverage from coffee powder. In this case, air is blown into a chamber which contains coffee and hot water together.

One disadvantage of the said prior art is the partial lack of development of very complex flavours. Today's consumers value an authentic coffee beverage or tea beverage which reproduces the complex flavour of the coffee powder or the tea leaves in the extracted beverage. In the case of apparatuses of the prior art, the abovementioned flavours can be extracted only unsatisfactorily in some cases.

A further disadvantage of apparatuses of the prior art is that the flavours are not extracted from the coffee powder in a defined manner. The user is not able to influence individual parameters. This also leads to a lack of evolvement of many flavours which are contained in the coffee. In addition, the taste of the user is not taken into account.

A further disadvantage relates to the many deficiencies in the quality of the froth (cream). Although many apparatuses of the prior art produce a froth on the coffee beverage, the froth disappears again very quickly after a short time. A nice foam which additionally also lasts a long time is particularly valued by consumers.

EP 0 250 810 relates to a method for extracting sealed cartridges containing an aromatic substance for the preparation of beverages. The aromatic substance, e.g. coffee, is contained in a sealed cartridge which is pierced to introduce water for prewetting. Said water spreads throughout the packed ground coffee, its flow being arrested by the membrane of the cartridge still intact. The volatile aromas are picked up by the prewetting water before the membrane opens. Then air is introduced and the pressure is increasing inside the cartridge until the membrane reaches its breaking resistance and opens. Only then the extraction water passes through irrigation channels under initially a low pressure.

WO 2006/002741 discloses a further method for extracting sealed cartridges containing an aromatic substance for the preparation of beverages. These methods cannot be applied, if the aromatic substance is **provided** as a loose product in an extraction chamber which may be several times larger than the space to accommodate a cartridge according to the prior art. Furthermore the prior does not allow to maintain a predefined pressure over a given time, since there is an increase of the pressure leading to the rupture of the cartridge.

### Summary of the invention

Starting from this prior art, the object of the invention is to specify an apparatus and a method which overcomes the disadvantages of the prior art. In particular, the aim is to use the apparatus according to the invention and the method according to the invention to extract the flavours from the flavour carrier, for example coffee powder or tea leaves, in a defined manner, if this carrier is not provided in a cartridge. An additional aim is to be able to produce a froth which is as thick and long-lasting as possible.

This object is achieved by a method having the features of Patent Claim 1 and an apparatus having the features of Patent Claim 7 Advantageous refinements of the invention are specified in the dependent claims.

Accordingly, a method for preparing a hot beverage, in particular a coffee beverage or a tea beverage, with flavours being extracted from a flavour carrier, which is prepared in particular from roasted coffee or dried tea, by means of water or steam, has a plurality of steps:
- A predetermined quantity of the flavour carrier, in which the flavours are contained, is added to an extraction chamber which can be closed in a fluid-tight manner in a first step
- the flavour carrier is compressed to below its initial volume after it is filled into the extraction chamber;
- Water or steam for extracting flavours from the flavour carrier is added to the extraction chamber in a subsequent step.
- The extracted beverage flows out of the extraction chamber in a subsequent step.
- Before the step of introducing water or steam into the extraction chamber, a step of introducing pressurized gas into the extraction chamber is executed. In the process, the internal pressure in the extraction chamber rises.
- the internal pressure, which is provided by the gas, in the extraction chamber is maintained for a predetermined waiting time, before the water or the steam is introduced into the extraction chamber;
- the internal pressure in the extraction chamber is between 5 bar and 50 bar, in particular between 7 and 18 bar, after the introduction of the water or the steam;
the extracted beverage flows out of the extraction chamber by opening and operating a valve.

A particularly good froth or cream can form on the beverage, in particular on the coffee beverage, on account of the introduction of the pressurized gas.

The internal pressure, which is provided by the gas, in the extraction chamber is maintained for a predetermined waiting time, before the water or the steam is introduced into the extraction chamber.

This promotes the development of the flavours in a particularly effective manner. Adapting the waiting time permits the user to prepare a beverage according to his taste.

Further advantageous embodiments of the method are characterized in the subclaims.

The apparatus according to the invention for preparing a hot beverage, in particular a coffee beverage or a tea beverage, comprises an extraction chamber for extracting flavours from a flavour carrier, which is prepared in particular from roasted coffee or dried tea, by means of water or steam, and a filter for filtering the beverage which is produced by the extraction. The apparatus is configured in such a way that a device which supplies compressed gas is provided, using which a pressurized gas can be fed into the extraction chamber which is filled with the flavour carrier; wherein the extraction chamber has a valve which can be opened so as to permit the extraction of the beverage.

Further advantageous embodiments of the apparatus are characterized in the subclaims.

### Brief description of the drawing

The invention is described in greater detail below with reference to the drawing in which:
- Fig. 1a: shows a flowchart of the method according to the invention;
- Fig. 1b: shows a flowchart of the method according to Figure 1a with further optional steps;
- Fig. 2: shows a longitudinal section through a first exemplary embodiment of an apparatus according to the present invention;
- Fig. 3: shows a longitudinal section through the exemplary embodiment according to Figure 2;
- Fig. 4: shows a longitudinal section through a second exemplary embodiment of an apparatus according to the present invention before the first method step;
- Fig. 5: shows a longitudinal section through the exemplary embodiment according to Figure 4 after the introduction of gas;
- Fig. 6: shows a longitudinal section through the exemplary embodiment according to Figure 5 after the introduction of gas and water; and
- Fig. 7: shows a longitudinal section through the exemplary embodiment according to Figure 6 during the extraction.

### Description of an exemplary embodiment

The apparatus according to the invention and the method according to the invention serve to extract flavours from a flavour carrier, such as roasted coffee or dried tea. The result of this is a coffee beverage or a tea beverage. The coffee or the tea is typically in the form of bulk goods, powder, granules or in compressed form as tablets. In particular, the powder is produced from ground and pre-roasted coffee beans. For reasons of simplicity, this description only uses the terms coffee and coffee beverage, with this formulation also including tea for the purposes of the present invention.

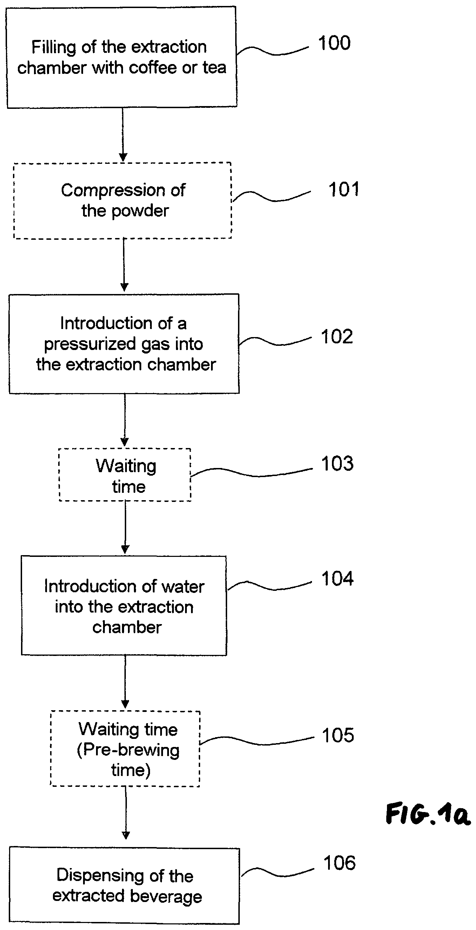

The flavours are extracted from the coffee powder in order to prepare a beverage in accordance with the methods of the present invention. Figure 1a shows a simplified flowchart of the method according to invention.

In a first step 100, an extraction chamber 1 of an apparatus for preparing coffee is filled with coffee powder. In this case, the coffee powder can be filled directly into the extraction chamber 1. As an alternative, the coffee powder can be contained in a
sachet. In this case, the compressed gas is introduced directly into the
sachet.

In a further optional step 101, the powder contained in the extraction chamber 1 is compressed. The degree of compression is a parameter which influences the formation of a good froth (cream). The degree of compression is an adaptation parameter relating to the properties of the beverage. A high degree of compression results in slow extraction. The result of this is, for example, a ristretto. A low degree of compression or no compression results in rapid extraction. This produces a café crème. Compression means that the volume of the powder is compressed to below the dumping volume of the powder.

In a further step 102, a pressurized gas is introduced into the extraction chamber 1. In this case, a pressure of 0.1 to 16 bar should be reached in the extraction chamber 1. The pressure is particularly preferably between 0.2 and 10 bar. The result of this is a mixture comprising the powder in the extraction chamber 1 and comprising the gas.

Varying the internal pressure in the extraction chamber 1 changes the flavour of the coffee beverage. Accordingly, the user can prepare an individual coffee beverage which corresponds to his taste by varying or individually setting the internal pressure. In addition, the introduction of a pressurized gas has the advantage that the subsequent extraction forms a particularly good froth.

Furthermore, it is also possible to configure the apparatus in such a way that the optimum parameters are already preset. The user can then have no direct influence on the beverage in this case.

The gas used may be, for example, air or inert gases, such as carbon dioxide (CO₂) or nitrogen (N₂) or argon (Ar). The gas can be pressurized in a wide variety of ways. If the gas used is air, an apparatus, which is described below, or a pump can be provided for generating the pressure. This is a very cost-effective solution. In addition, it is also possible to store the gas in a gas bottle or cartridge. The desired pressure can be set by means of a pressure-reduction device. The advantage of a gas reservoir provided as a pressurized recipient resides in the fact that the air can be introduced very quickly in the extraction chamber 1, e.g. within between 0.01 and 0.5 seconds, preferably within 0.1 sec, wherein the prior art uses a pump, slowly raising the internal pressure.

In a further step 103, the internal pressure is maintained over a defined waiting time. The waiting time is preferably between 0.1 and 5 seconds. A waiting time of 0.5 to 3 seconds is particularly preferred. The user can likewise preferably select the waiting time or the residence time himself and as a result influence the flavour of the resulting coffee beverage. The residence time is accordingly a further parameter for influencing the flavour. Waiting times of more than 10 seconds are possible but are not valued by consumers.

In the further step 104, hot water or steam is conducted into the extraction chamber 1 which is pressurized. The water can be conducted into the extraction chamber 1 at various points within a short interval of e.g. 0.1 to 2 seconds. As a result, the pressure in the extraction chamber 1 is increased further. The internal pressure in the extraction chamber 1 is preferably between 5 and 50 bar after the introduction of the water or of the steam. An internal pressure of between 7 and 18 bar is particularly preferred.

On account of this further increase in pressure, the flavours can be extracted from the coffee particularly effectively. Experiments by the applicant have shown that flavours which have been unknown to date can be identified by coffee testers.

In a further step 105, the internal pressure is maintained over a defined waiting time or pre-brewing time. The waiting time is preferably between 0.1 and 50 seconds. A waiting time of from 3 to 15 seconds is particularly preferred. The user can likewise preferably select the waiting time or residence time himself and as a result further influence the flavour of the resulting coffee beverage. The pre-brewing time is accordingly a further parameter for influencing the flavour. Waiting times of more than 50 seconds are possible but are not valued by consumers.

The waiting time or pre-brewing time is optional. As an alternative, this step can be skipped. In this case, this means that the waiting time is 0 seconds long.

In a further step 106, the extracted beverage is dispensed from the extraction chamber 1 by opening and operating a valve. The sudden opening of the valve and the resulting expansion have a positive effect on the quality and on the froth formation of the coffee. This results in a coffee beverage of particularly high quality. In particular, the beverage has a nice and long-lasting froth. This is due to the fact that the coffee itself being under pressure through the initial areation is facing an environment in the extraction chamber 1 having a low pressure due to the sudden opening of the valve which results in a spray valve effect on the basis of the single coffee powdered grain, whereas the prior art only reduces the pressure of the extraction chamber itself.

The time within which the predefined pressure is reached within the gas delivery step 102 as well as the time within which the predefined pressure is reached within the water delivery step 104 is faster than for the prior art, since there is a defined pressure level and no rupture of a cartridge has to be reached after a monotone increase of the inner pressure within the cartridge.

The method according to the invention can be executed using an apparatus, which is described below, according to one exemplary embodiment. However, the method can also be carried out using alternative apparatuses and is not limited to the exemplary embodiments below.

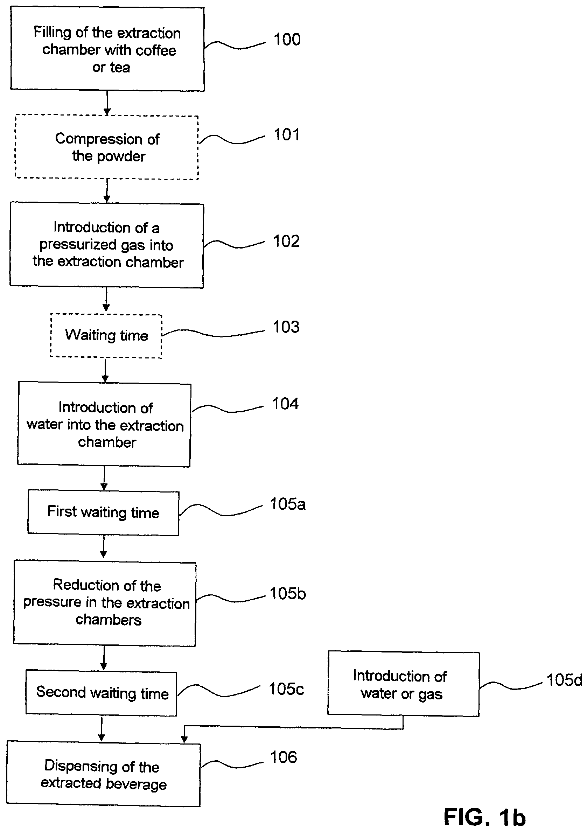

Figure 1b shows the method according to the invention with the optional steps of a first waiting time 105a, reduction of the pressure in the extraction chamber 105b, second waiting time 105c and introduction of water or gas 105d. In other words, it can also be said that the step for the waiting time 105 or pre-brewing time is replaced by the said steps. In particular, the step of introducing water or gas 105d can also be carried out alone.

The step for the first waiting time 105a is executed after the step of introducing water or steam into the extraction chamber 104. The first waiting time is preferably between 0.1 and 50 seconds. A waiting time of from 1 to 15 seconds is particularly preferred.

In the step of reducing the pressure 105b, the valve by means of which the extracted beverage can flow out of the extraction chamber 1 is open for a short time. This opening time is preferably between 0.05 and 1.5 seconds. The opening time is particularly preferably between 0.05 and 0.5 seconds. By opening the valve, the pressure in the chamber is reduced, for example by 10% to 20% of the internal pressure, that is to say for example from 16 bar to 14 bar. In this case, the valve can be partially opened over a longer period of time, and this can be called partial opening, or the valve can be fully opened over a short period of time, and this can be called full opening.

Before the step of dispensing the extracted beverage 106, the step for the second waiting time 105c, which can also be called the pre-brewing time, is executed. In this case, the internal pressure is maintained over a defined waiting time. The waiting time is preferably between 0.1 and 50 seconds. A waiting time of from 3 to 15 seconds is particularly preferred.

In the subsequent step 106, the beverage is dispensed from the extraction chamber. In this case, the valve is preferably fully opened.

As an alternative, additional water, steam or gas can be supplied to the extraction chamber 1 before or during the step of dispensing the extracted beverage 106. This therefore means that the said additional fluids can subsequently flow into the extraction chamber 1 during the period of time in which the valve of the extraction chamber 1 is open.

As an alternative, the step of introducing water or gas 105d can also be executed before or during step for the second waiting time 105c.

The step of introducing water or gas 105d can also be applied in the method described in Figure 1a. In this case, this step 105d can be executed before or during the waiting time 105 or before during the step of dispensing the extracted beverage 106.

All the said steps of the method according to the invention can be combined with one another in any desired and reasonable order. It is likewise feasible for one method step or a plurality of method steps of the described exemplary embodiments to not be executed.

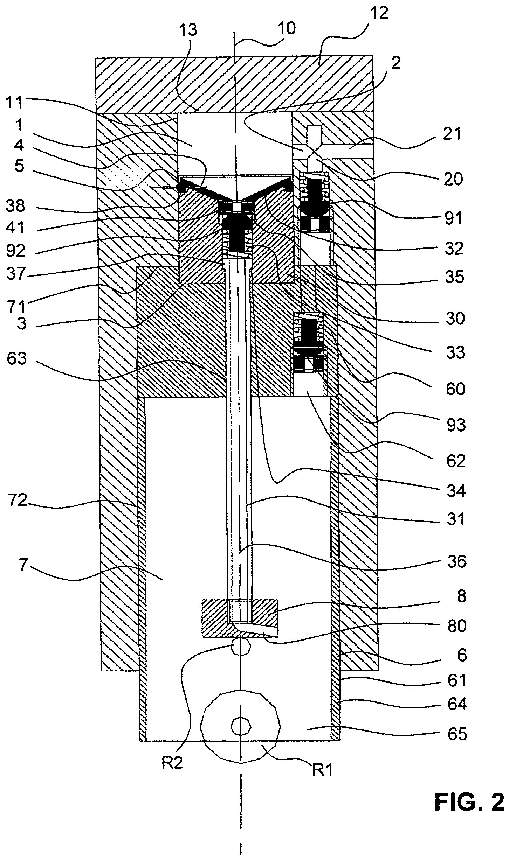

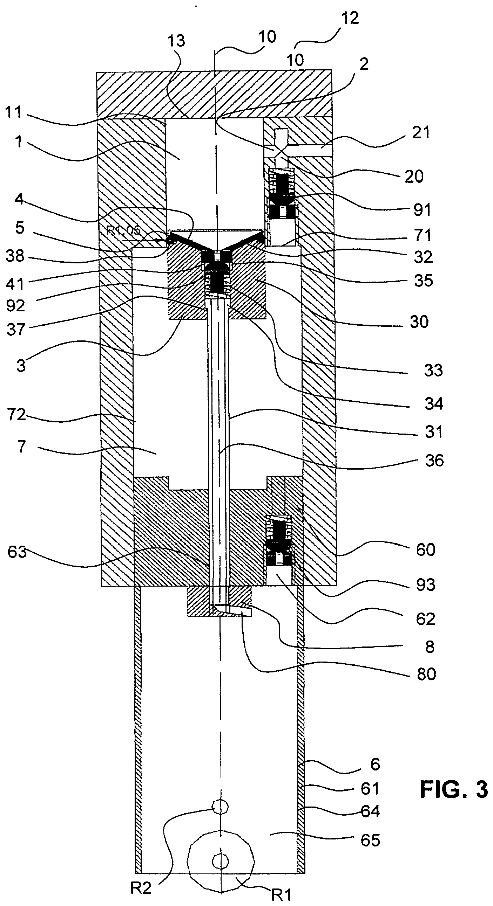

Figures 2 and 3 show schematic side views of a possible refinement of a part of an inventive apparatus according to an exemplary embodiment.

The part, which is schematically illustrated in Figures 2 and 3, of an apparatus for extracting the flavours from coffee for preparing a coffee beverage is substantially that part of the apparatus in which the extraction takes place. Devices for heating water and for producing hot water, for example a boiler, water tank, operator control elements etc., are known to a person skilled in the art, and so a description of these elements is superfluous.

An extraction chamber 1 serves to accommodate the coffee powder. The extraction chamber 1 is preferably configured in a circular-cylindrical manner with a side wall 11 and has a centre axis 10. Furthermore, an upper opening 13 in the extraction chamber 1 is sealed off by a cover 12 in the upper region. In the upper region, the extraction chamber 1 has an inlet 2 through which the fluids can be introduced into the extraction chamber 1. In the present exemplary embodiment, the inlet 2 is configured as a combined inlet 2. That is to say, both gases and liquids can be fed into the extraction chamber 1 via the combined inlet 2. To this end, the inlet 2 substantially has two ducts, namely a gas duct 20 and a liquid duct 21.

A pressurized gas can be fed into the extraction chamber 1 via the gas duct 20. The gas duct 20 is additionally provided with a non-return valve 91. In this case, the non-return valve 91 prevents a fluid from escaping from the extraction chamber 1 through the gas duct 20.

Hot water or hot steam can be conducted into the extraction chamber 1 via the liquid duct 21. To this end, the liquid duct 21 is connected to a corresponding means, for example to a boiler. The boiler heats up the water, so that that steam or hot water is produced. A means, for example a pump, conveys the water or the steam to the extraction chamber. In addition, the gas duct 21 has an element (not illustrated) which prevents water or steam returning from the extraction chamber 1. This means may be, for example, a non-return valve in the gas duct 21 or a non-return valve in the boiler or a water pump.

As an alternative, the gas duct 20 and the liquid duct 21 can also be separate. In this case, the extraction chamber has two inlets which can be arranged in any desired manner. In particular, the two inlets can be arranged at the same height and opposite one another.

An outlet cylinder 3 is additionally arranged in the extraction chamber 1. The extraction chamber is accordingly configured to be fluid-tight to the surroundings by means of the side wall 11, the cover 12 and the outlet cylinder 3.

The outlet cylinder 3 can be moved in relation to the extraction chamber 1 in the direction of the centre axis 10. The outlet cylinder 3 substantially comprises a piston 30 and a piston rod 31. At its end which faces the extraction chamber 1, the piston 30 has a conically extending recess 32. The conical recess 32 merges with an outlet duct 33 which extends along the centre axis 10 in the form of a circular-cylindrical opening. In the lower region of the outlet duct 33, the piston rod 31 protrudes into the piston 30. In this case, the diameter of the outlet duct 33 is reduced, so that a projection 34 is produced on which the piston rod 31 can rest. It goes without saying that other types of connection, for example a screw connection in which the piston rod 31 is screwed into the piston 30, are also feasible. In the upper region, the outlet duct 33 has a thread 35. The outlet cylinder 3 can be moved by rotation on a schematically illustrated wheel R1 which acts, for example, on a toothed rack on the cylinder. As an alternative, the outlet cylinder 3 can also be operated by mechanical, pneumatic or magnetic means.

The piston rod 31 has an outlet duct 36 which extends in the axial direction of the piston rod 31. In this case, the outlet duct 36 extends over the entire length of the piston rod 31. In addition, the piston rod 31 has a flange 37 in the region which protrudes into the piston 30. The flange 37 of the piston rod 31 rests on the projection 34 of the piston.

In addition, a non-return valve 92 is arranged in the outlet duct 33, between the conical recess 32 and the projection 34. The non-return valve 92 prevents the introduced gas from flowing out of the extraction chamber 1.

After the introduction of the water or of the steam, the internal pressure in the extraction chamber rises. As soon as the extraction is terminated, the non-return valve 92 is opened. That is to say, the valve is closed and provides a certain resistance during the extraction, and the valve is opened after the extraction. In this case, the beverage can, as described, flow out of the extraction chamber 1. The non-return valve 92 can be operated in any desired manner. For example, it is feasible for the non-return valve 92 to be mechanically operated by means of the piston rod 31. In this case, the piston rod 31 acts against the non-return valve 92. As soon as the piston rod 31 is at a distance from the non-return valve 92, the internal pressure can act on the non-return valve 92 as a force which is greater than the opposing spring force of the non-return valve 92. As an alternative, the non-return valve 92 can also be configured as an electrical or magnetic or pneumatic non-return valve. In this case, the non-return valve is operated by a pulse from a control means.

A filter 4 is arranged in the conical recess 32. The filter 4 is funnel-shaped and has a thread 41 using which the funnel 4 can be screwed into the piston 31.

Furthermore, a piston seal 5 which produces a sealing effect between the extraction chamber 1 and the piston 31 is arranged in the upper region of the piston 31. In the present exemplary embodiment, the seal is an O-ring which is clamped in between the filter 4 and a projection 38 which is arranged on the piston 31.

An outlet piece 8 is arranged at that end of the piston rod 31 which is opposite the piston 30. The outlet piece 8 is of substantially cylindrical configuration and comprises an outlet opening 80. The outlet opening 80 substantially continues the outlet duct 36 of the piston rod 31. The coffee beverage can flow out of the apparatus via this outlet opening 80.

In order to admit air into the extraction chamber 1 before the extraction process, the present exemplary embodiment has a compression cylinder 6. The compression cylinder 6 substantially has a piston 60 and a piston rod 61. The piston 60 slides in a compression space 7 which is arranged beneath the extraction chamber 1 in the present exemplary embodiment. On its outer wall which is directed towards the compression space 7, the piston 60 preferably has a seal. The compression space 7 comprises a base 71 and a side wall 72 and forms a device which supplies compressed gas. The compression cylinder 6 can be moved by rotation on a schematically illustrated wheel R2 which, for example, acts on a toothed rack on the cylinder. As an alternative, the compression cylinder 6 can also be operated by mechanical, pneumatic or magnetic means. The extraction chamber 1 comprises a predefined volume, e.g. between 5 and 30 cm³, e.g. between 10 and 20 cm³. The extraction chamber 1 has a volume which is at least 1,5 to 2 times the usual volume of the aromatic substance to be provided for extraction, preferably 3 to 4 times said volume. Such an extraction chamber 1 then provides an effective areation space for the aromatic carrier, which can loosely be distributed in the extraction chamber 1 upon introduction of the dry air, if no compression step 101 is present.

The piston 60 has a feed opening 62 which permits air to pass from the surroundings, through the feed opening 62, into the compression space 7. A non-return valve 93 which prevents air from being discharged to the surroundings through the feed opening 62 during the compression process is arranged in the feed opening 62. The compression space 7 can be supplied with air via the non-return valve 93. If the cylinder is moved from the retracted position, that is to say from the position in which the piston 60 rests on the base 70, into the extended position, the non-return valve 93 will open on account of the prevailing negative pressure.

In the present exemplary embodiment, the piston rod 61 has the same outside diameter as the piston 60. In this case, the piston rod 61 has a wall 64 which has a lower thickness than the diameter of the piston rod, so that a piston space 65 is produced.

On account of the arrangement of the compression space 7 beneath the extraction chamber 1, the piston 60 has an opening 63 through which the piston rod 31 of the outlet cylinder 3 can protrude. That is to say, the piston rod 31 protrudes into the piston space 65.

The compression space 7 is connected to the extraction chamber 1 via the gas duct 20 of the inlet 2, so that the air which is contained in the compression space 7 can be forced into the extraction chamber.

Figure 2 shows all the parts of the apparatus according to the present exemplary embodiment in the starting position before the method according to the invention is executed.

After the first step 100 for filling the coffee into the extraction chamber 1, the compression cylinder 6 is moved in such a way that the compression space 7 is reduced in size.

By moving the compression cylinder 6, the air or the gas which is contained in the compression space 7 is forced into the extraction chamber 1 via the gas duct 20 or via the non-return valve 91 in a further subsequent step 101. The further the piston 60 penetrates into the compression space 7, the higher is the pressure in the extraction chamber 1. Shortly before the end position is reached, the piston 60 of the compression cylinder 6 pushes the outlet cylinder 3 into the extraction chamber 1. As a result, the pressure in the extraction chamber 1 is increased further. As soon as the piston 60 touches the base 71 of the compression space 7, the maximum pressure is reached in the extraction chamber 1.

If the user desires a pressure which is lower than the maximum pressure, it is only necessary to limit the travel of the compression cylinder 6. In this case, the piston 60 would not touch the base 71 of the compression space 7. As an alternative, an overpressure valve which can be adjusted by the user could also be provided. In this case, the compression cylinder 6 can always be moved to such an extent that the piston 60 touches the base 71 of the compression space 7.

As soon as the desired pressure is reached in the extraction chamber, that is to say as soon as the piston 60 is in the correct position, the pressure in the extraction chamber 1 is maintained for the above-described waiting time.

After the waiting time, hot water or steam is added to the extraction chamber 1 via the liquid duct 20. In the process, the flavours are extracted from the coffee and the coffee beverage is produced.

The coffee beverage can flow out of the extraction chamber 1 via the outlet ducts 33 and 36 in step 104 as soon as the non-return valve 92 beneath the filter 4 is opened.

The described exemplary embodiment of the apparatuses has exemplary characteristics. The method according to the present invention can also be implemented using other means or apparatuses.

For example, it is feasible to use a pump instead of the two pistons in order to permit pressurized air to flow into the extraction chamber 1 so that the pressure in the extraction chamber 1 increases. This pump then forms the device which supplies compressed gas.

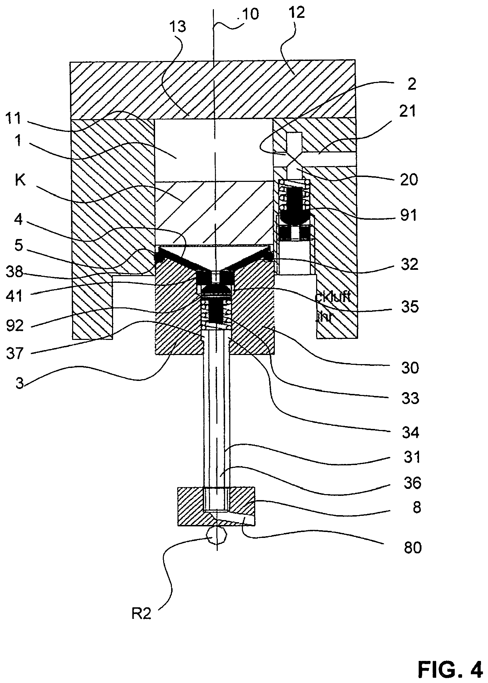

Figures 4 to 8 show a further exemplary embodiment of an apparatus according to the present invention. Identical parts are provided with the same reference symbols. In this case, compressed air is supplied by a pump (not shown) or a cartridge in the form of the device which supplies compressed gas, instead of the compression cylinder. The pump can aspirate and compress ambient air. The device which supplies compressed gas preferably provides a pressure of between 0.1 bar and 12 bar, in particular between 0.2 bar and 10 bar. The pump can be correspondingly configured so that pressures in the said range can be provided. If the cartridge is used, a pressure which is several times higher than the said ranges prevails in the interior of the cartridge. The pressure can then be reduced to the desired range by means of a pressure-reduction device.

Figure 4 shows the outlet cylinder 3 in the lower position. The extraction chamber 1 can be filled from above through the opening 13 before the cover 12 is closed. If the outlet cylinder 3 is in the lower position, the volume of the extraction chamber 1 can be called the empty volume. When filling the extraction chamber 1, such an amount of coffee K is filled that said coffee takes up approximately 40% to 60% of the empty volume of the extraction chamber 1. The coffee K is represented by diagonal hatching.

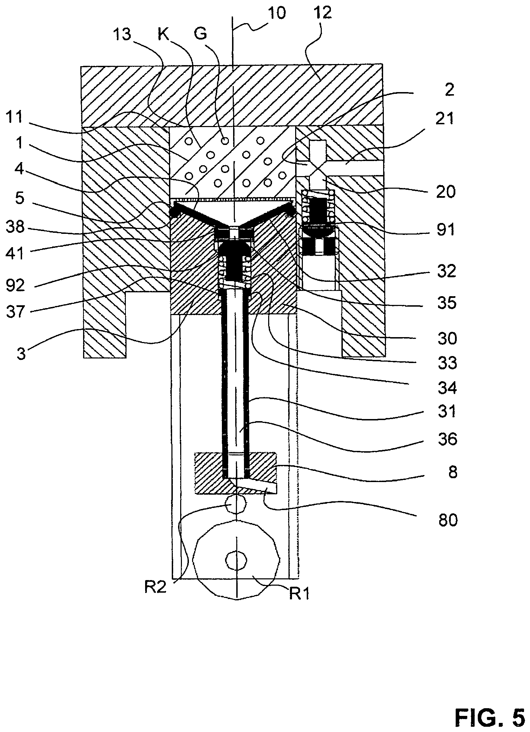

Figure 5 shows the outlet cylinder 3 in its upper position. The powder is compressed in this case, with the empty volume of the extraction chamber being reduced by 60% to 40%. The degree of reduction of the empty volume depends on the amount of coffee filled and on the force of the outlet cylinder 3.

The gas G is then introduced into the extraction chamber 1 via the inlet 2 by means of the non-return valve 91 and the gas duct 20. The gas G is schematically illustrated as a large number of empty circles. In this case, the internal pressure P_{I} in the extraction chamber 1 increases by the partial pressure P_{G} of the gas, and a mixture comprising the powder K and the gas G is formed. In this case, the gas is the air taken from the surroundings.

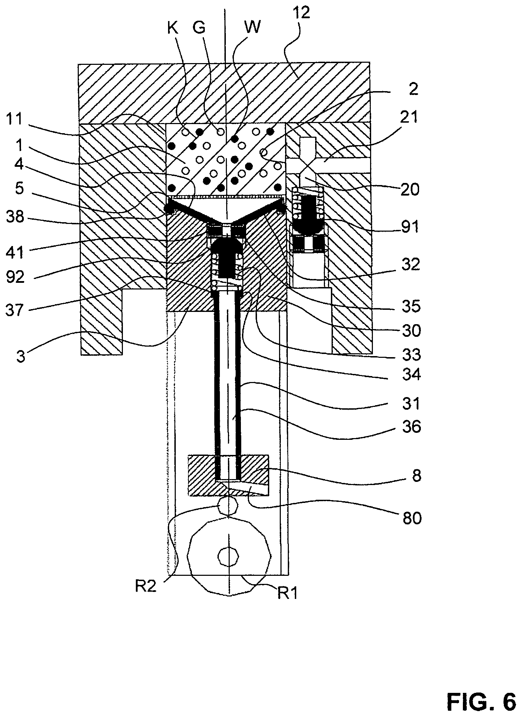

After the optional step of waiting or maintaining the internal pressure, steam W is added to the extraction chamber 1. In Fig. 6, the steam W is schematically illustrated as a large number of filled circles. The internal pressure of the extraction chamber increases here by the partial pressure of the steam P_{W}, and a mixture comprising the powder K, the gas G and the steam W is formed.

If hot water is filled into the extraction chamber 1, the outlet cylinder 3 is moved downwards as a result of the inability to compress the water.

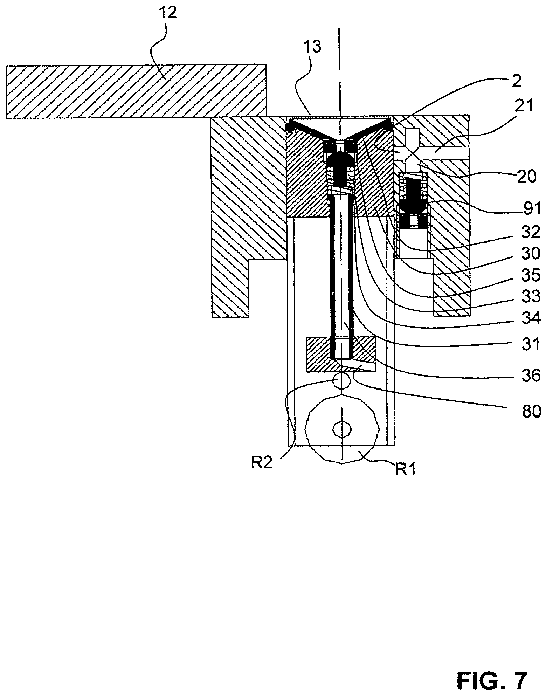

In a subsequent step, the non-return valve 92 is opened and the extracted coffee beverage can flow out. The non-return valve 92 is opened as described above. Figure 7 shows the outlet piston 3 in its topmost position. In addition, the cover 11, which closes the extraction chamber 1 at the top, is open. The batch of coffee which remains in the coffee chamber 1 can be expelled via the opening 13.

In the described exemplary embodiments, various control means are provided for controlling the procedures according to the inventive method. Control means of this type are known to a person skilled in the art, and a description of the said control means is therefore considered superfluous.

In further exemplary embodiments, it is additionally feasible for the coffee to be contained in a sachet. In this case, the sachet is placed in the extraction chamber.

It is further possible to operate a known manually operated coffee machine, in particular a manually operated piston machine in which the powder is introduced into a piston, in accordance with the method of the present invention. In this case, a known piston machine can be equipped with parts of the apparatus according to the invention.

Furthermore, it is feasible for a known espresso machine or coffee machine to be equipped with the parts of the abovementioned apparatus according to invention, so that the method according to the invention can be carried out using a converted machine.

### List of reference symbols

- 1: Extraction chamber
- 2: Inlet
- 3: Outlet cylinder
- 4: Filter
- 5: Piston seal
- 6: Compression cylinder
- 7: Compression space
- 8: Outlet piece
- 10: Centre axis
- 11: Side wall
- 12: Cover
- 13: Opening
- 20: Gas duct
- 21: Liquid duct
- 30: Piston
- 31: Piston rod
- 32: Recess
- 33: Outlet duct
- 34: Projection
- 35: Thread
- 36: Outlet duct
- 37: Flange
- 38: Projection
- 41: Thread
- 60: Piston
- 61: Piston rod
- 62: Feed opening
- 63: Opening
- 64: Wall
- 65: Piston space
- 70: Base
- 71: Side wall
- 91-93: Non-return valves
- 100-106: Method steps
- K: Coffee or tea
- G: Gas
- W: Water or steam

## Claims

1. Method for preparing a hot beverage, in particular a coffee beverage or a tea beverage, with flavours being extracted from a flavour carrier, which is prepared in particular from roasted coffee or dried tea, by means of water or steam, **characterized in that**
- a predetermined quantity of the flavour carrier, in which the flavours are contained, being added to an extraction chamber (1) of an apparatus for preparing a hot beverage and which can be closed in a fluid-tight manner in a first step (100);
- the flavour carrier is compressed to below its initial volume after it is filled into the extraction chamber (1);
- water or steam for extracting flavours from the flavour carrier being added to the extraction chamber (1) in a subsequent step (104); and
- the extracted beverage flowing out of the extraction chamber (1) in a subsequent step (106),
- before the step (104) of introducing water or steam into the extraction chamber (1), a step (102) of introducing pressurized gas into the extraction chamber (1) is executed in order to permit the internal pressure in the extraction chamber (1) to rise above the ambient pressure;
- the internal pressure, which is provided by the gas, in the extraction chamber is maintained (102) for a predetermined waiting time, before the water or the steam is introduced (104) into the extraction chamber;
- the internal pressure in the extraction chamber is between 5 bar and 50 bar, in particular between 7 and 18 bar, after the introduction of the water or the steam;
- the extracted beverage flows out of the extraction chamber (1) by opening and operating a valve.

2. Method according to Claim 1, **characterized in that** the internal pressure in the extraction chamber is between 0.1 bar and 16 bar, in particular between 0.2 and 10 bar, after the introduction of the gas.

3. Method according to Claim 1 or 2, **characterized in that** the duration of the waiting time is between 0.1 and 5 seconds .

4. Method according to one of the preceding claims, **characterized in that** the steam or the water is held (105) in the extraction chamber for a predetermined waiting time or pre-brewing time.

5. Method according to Claim 4, **characterized in that** the duration of the pre-brewing time is between 0.1 and 50 seconds.

6. Method according to one of the preceding claims, **characterized in that** the flavour carrier which is filled into the extraction chamber (1) takes up 40% to 60% of the empty volume of the extraction chamber (1).

7. Apparatus for preparing a hot beverage, in particular a coffee beverage or a tea beverage, comprising an extraction chamber (1), which can be sealed in a fluid-tight manner to the surroundings, for extracting flavours from a flavour carrier, which is prepared in particular from roasted coffee or dried tea, by means of water or steam, and a filter (4) for filtering the beverage which is produced by the extraction, **characterized in that** a device which supplies compressed gas is provided, using which a pressurized gas can be fed into the extraction chamber (1) which is filled with the flavour carrier; wherein the extraction chamber (1) has a valve which can be opened so as to permit the extraction of the beverage.

8. Apparatus according to Claim 7, **characterized in that** the device which supplies compressed gas is a pump or one or more compressed-gas cylinders.

9. Apparatus according to Claim 7 or 8, **characterized in that** gas which can be emitted by the device which supplies compressed gas is an inert gas, for example carbon dioxide (CO₂) or nitrogen (N2), or air.

## Patentansprüche

1. Verfahren zum Zubereiten eines Heissgetränks, insbesondere eines Kaffeegetränks oder eines Teegetränks, wobei Aromastoffe aus einem Aromaträger, der insbesondere aus geröstetem Kaffee oder getrocknetem Tee hergestellt wird, mittels Wasser oder Dampf extrahiert werden, **dadurch gekennzeichnet, dass**
- in einem ersten Schritt (100) eine vorbestimmte Menge des Aromaträgers, in dem die Aromastoffe enthalten sind, in eine Extraktionskammer (1) einer Vorrichtung zum Zubereiten eines Heissgetränks gegeben wird, und die fluiddicht verschlossen werden kann;
- der Aromaträger nach dem Einfüllen in die Extraktionskammer (1) unter sein Ausgangsvolumen verdichtet wird;
- in einem nachfolgenden Schritt (104) Wasser oder Dampf zum Extrahieren von Aromastoffen aus dem Aromaträger in die Extraktionskammer (1) gegeben wird;
- in einem nachfolgenden Schritt (106) das extrahierte Getränk aus der Extraktionskammer (1) fließt,
- vor dem Schritt (104) des Einbringens von Wasser oder Dampf in die Extraktionskammer (1) ein Schritt (102) des Einbringens von Druckgas in die Extraktionskammer (1) ausgeführt wird, um dem Innendruck in der Extraktionskammer (1) zu erlauben, über den Umgebungsdruck zu steigen;
- der Innendruck, der durch das Gas bereitgestellt wird, in der Extraktionskammer für eine vorbestimmte Wartezeit gehalten wird (102), bevor das Wasser oder der Dampf in die Extraktionskammer eingebracht wird (104);
- der Innendruck in der Extraktionskammer nach dem Einbringen des Wassers oder Dampfs zwischen 5 bar und 50 bar, insbesondere zwischen 7 und 18 bar, beträgt;
- das extrahierte Getränk durch Öffnen und Betätigen eines Ventils aus der Extraktionskammer (1) fließt.

2. Verfahren nach Anspruch 1, **dadurch gekennzeichnet, dass** der Innendruck in der Extraktionskammer nach dem Einbringen des Gases zwischen 0,1 bar und 16 bar, insbesondere zwischen 0,2 und 10 bar, beträgt;

3. Verfahren nach Anspruch 1 oder 2, **dadurch gekennzeichnet, dass** die Zeitdauer der Wartezeit zwischen 0.1 und 5 Sekunden beträgt.

4. Verfahren nach einem der vorhergehenden Ansprüche, **dadurch gekennzeichnet, dass** der Dampf oder das Wasser in der Extraktionskammer für eine vorbestimmte Wartezeit oder Vorbrühzeit gehalten wird (105).

5. Verfahren nach Anspruch 4, **dadurch gekennzeichnet, dass** die Zeitdauer der Vorbrühzeit zwischen 0.1 und 50 Sekunden beträgt.

6. Verfahren nach einem der vorhergehenden Ansprüche, **dadurch gekennzeichnet, dass** der Aromaträger, der in die Extraktionskammer (1) eingefüllt ist, 40% bis 60% des Leervolumens der Extraktionskammer (1) einnimmt.

7. Vorrichtung zum Zubereiten eines Heissgetränks, insbesondere eines Kaffeegetränks oder eines Teegetränks, umfassend eine Extraktionskammer (1), die fluiddicht gegenüber der Umgebung verschlossen werden kann, zum Extrahieren von Aromastoffen aus einem Aromaträger, der insbesondere aus geröstetem Kaffee oder getrocknetem Tee hergestellt wird, mittels Wasser oder Dampf, und einen Filter (4) zum Filtern des Getränks, das durch die Extraktion hergestellt wird, **dadurch gekennzeichnet, dass** eine komprimiertes Gas liefernde Einrichtung bereitgestellt wird, unter Verwendung derer ein Druckgas in die Extraktionskammer (1) eingeleitet werden kann, die mit dem Aromaträger befüllt ist; wobei die Extraktionskammer (1) ein Ventil aufweist, das geöffnet werden kann, um die Extraktion des Getränks zu erlauben.

8. Vorrichtung nach Anspruch 7, **dadurch gekennzeichnet, dass** die Druckgas liefernde Einrichtung eine Pumpe oder ein oder mehrere Druckgaszylinder ist bzw. sind.

9. Vorrichtung nach Anspruch 7 oder 8, **dadurch gekennzeichnet, dass** Gas, das von der Druckgas liefernden Einrichtung abgegeben werden kann, ein inertes Gas bzw. Schutzgas wie beispielsweise Kohlendioxid (CO₂) oder Stickstoff (N2), oder Luft ist.

## Revendications

1. Procédé de préparation d'une boisson chaude, en particulier une boisson à base de café ou une boisson à base de thé, dont les arômes sont extraits d'un support d'arômes, qui est préparé notamment à partir de café torréfié ou de thé séché, au moyen d'eau ou de vapeur, **caractérisé en ce que**
- une quantité prédéterminée du support d'arômes, dans lequel les arômes sont contenus, étant ajoutée à une chambre d'extraction (1) d'un appareil destiné à préparer une boisson chaude et qui peut être fermée de manière étanche à des fluides dans une première étape (100) ;
- le support d'arômes est comprimé au-dessous de son volume initial après avoir été introduit dans la chambre d'extraction (1) ;
- de l'eau ou de la vapeur pour extraire des arômes du support d'arômes étant ajoutée à la chambre d'extraction (1) dans une étape suivante (104) ; et
- la boisson extraite sortant de la chambre d'extraction (1) dans une étape ultérieure (106),
- avant l'étape (104) d'introduction d'eau ou de vapeur dans la chambre d'extraction (1), une étape (102) d'introduction de gaz sous pression dans la chambre d'extraction (1) est mis en oeuvre pour permettre l'élévation de la pression interne dans la chambre d'extraction (1) au-dessus de la pression ambiante ;
- la pression interne, fournie par le gaz, dans la chambre d'extraction est maintenue (102) pendant un temps d'attente prédéterminé, avant que l'eau ou la vapeur soit introduite (104) dans la chambre d'extraction ;
- la pression interne dans la chambre d'extraction est entre 5 bars et 50 bars, en particulier entre 7 et 18 bars, après l'introduction de l'eau ou de la vapeur ;
- la boisson extraite sort de la chambre d'extraction (1) par ouverture et actionnement d'une vanne.

2. Procédé selon la revendication 1, **caractérisé en ce que** la pression interne dans la chambre d'extraction est entre 0,1 bar et 16 bars, en particulier entre 0,2 et 10 bars, après l'introduction du gaz.

3. Procédé selon la revendication 1 ou 2, **caractérisé en ce que** le temps d'attente est entre 0,1 et 5 secondes.

4. Procédé selon l'une des revendications précédentes, **caractérisé en ce que** la vapeur ou l'eau est maintenue (105) dans la chambre d'extraction pendant un temps prédéterminé d'attente ou de pré-infusion.

5. Procédé selon la revendication 4, **caractérisé en ce que** le temps de pré-infusion est entre 0,1 et 50 secondes.

6. Procédé selon l'une des revendications précédentes, **caractérisé en ce que** le support d'arômes qui est introduit dans la chambre d'extraction (1) occupe 40 % à 60 % du volume vide de la chambre d'extraction (1).

7. Appareil destiné à préparer une boisson chaude, en particulier une boisson à base de café ou une boisson à base de thé, comprenant une chambre d'extraction (1), qui peut être scellée de manière étanche à des fluides par rapport à l'environnement, pour extraire des arômes d'un support d'arômes, qui est préparé notamment à partir de café torréfié ou de thé séché, au moyen d'eau ou de vapeur, et un filtre (4) pour filtrer la boisson produite par l'extraction, **caractérisé en ce qu'**il est prévu un dispositif qui produit du gaz comprimé, à l'aide duquel un gaz sous pression peut être introduit dans la chambre d'extraction (1) qui est remplie avec le support d'arômes ; dans lequel la chambre d'extraction (1) a une soupape qui peut être ouverte pour permettre l'extraction de la boisson.

8. Appareil selon la revendication 7, **caractérisé en ce que** le dispositif qui produit du gaz comprimé est une pompe ou au moins un cylindre de gaz comprimé.

9. Appareil selon la revendication 7 ou 8, **caractérisé en ce que** le gaz pouvant être émis par le dispositif qui produit du gaz comprimé est un gaz inerte, par exemple du dioxyde de carbone (CO₂) ou de l'azote (N2), ou de l'air.
